# EUROPEAN PATENT APPLICATION

(11) **EP 1 887 410 A2**
(43) Date of publication of application: **13.02.2008**
(21) Application number: 07015372.1
(22) Date of filing: 06.08.2007
(51) Int. Cl.: G02B 26/08

(54) **Manufacturing method for variable shape mirror**

(30) Priority: 09.08.2006 JP 2006216638
(71) Applicant: Funai Electric Co., Ltd., Daito-shi, Osaka 574-0013 (JP); The Ritsumeikan Trust, Kyoto-shi, Kyoto 604-8520 (JP)
(72) Inventor: Tanaka, Fuminori, Daito-shi, Osaka 574-0013 (JP); Tanaka, Katsuhiko, Kusatsu, Shiga, 525-8577 (JP); Ishii, Akira, Kusatsu, Shiga, 525-8577 (JP); Sugiyama, Susumu, Kusatsu, Shiga, 525-8577 (JP)
(74) Representative: Beetz & Partner

(57) **Abstract**

A variable shape mirror includes a support substrate provided with a conductive bonding portion that is divided into two areas bonded to a lamination type piezoelectric actuator. A bonding surface of the piezoelectric actuator is provided with a first metal film that is divided into a first area and a second area that are not connected to each other electrically. Side faces of the piezoelectric actuator are provided with a second metal film that connects a first common electrode to the first area electrically or connects a second common electrode to the second area electrically. The piezoelectric actuator is disposed on the bonding portion so that the individual areas of the first metal film are connected electrically to the different areas of the bonding portion, respectively.

## Description

### BACKGROUND OF THE INVENTION

### Field of the Invention

The present invention relates to a structure of a variable shape mirror that is provided to an optical device such as an optical pickup device and is capable of changing a shape of its reflection plane so that correction or the like of optical distortion of a light beam is performed. In addition, the present invention relates to a manufacturing method for the variable shape mirror.

### Description of Related Art

Conventionally, there are various proposals about a variable shape mirror that is capable of changing a shape of its reflection plane so as to correct optical distortion or the like of an incident light beam, and such a variable shape mirror is used in wide range of applications including an optical pickup device and an image processing apparatus.

For example, in the field of the optical pickup device, the variable shape mirror is used for correcting wave aberration that may occur when information is read or written on an optical disc such as a CD (compact disc) or a DVD (digital versatile disc), which includes coma aberration that may happen when a disc surface of the optical disc is tilted with respect to the optical axis and spherical aberration resulted from a variation of a transparent resin film (a protective layer) that protects the recording surface of the optical disc, as shown in JP-A-2004-109562 or JP-A-2005-196859.

As this variable shape mirror, there are introduced various types conventionally, including a variable shape mirror having a unimorph or a bimorph shape using a piezoelectric element as shown in JP-A-2004-109562 and a variable shape mirror that is made of laminated thin films such as piezoelectric films as shown in JP-A-2005-196859.

As another type of the variable shape mirror, there is a variable shape mirror that can deform its reflection plane utilizing expansion and contraction of a column-shaped piezoelectric element (piezoelectric actuator) in the longitudinal direction (the vertical direction), as shown in JP-A-H05-333274. Furthermore, the variable shape mirror that can deform its reflection plane utilizing expansion and contraction of the piezoelectric element in the longitudinal direction has an advantage in that it can be manufactured easily and another advantage in cost and the like compared with the variable shape mirror disclosed in JP-A-2005-196859, which is made of laminated thin films.

In addition, if expansion and contraction of the piezoelectric element in the longitudinal direction is utilized, as shown in JP-A-H05-333274, a generated force can be increased by using a lamination type piezoelectric actuator (that has layer piezoelectric members and layered inner electrodes laminated alternately as shown in JP-A-2003-159697 too) as the piezoelectric element Therefore, it has an advantage that the reflection plane can be deformed more largely compared with the variable shape mirror shown in JP-A-2004-109562 or JP-A-2005-196859.

However, if the lamination type piezoelectric actuator is used in the structure such as shown in JP-A-H05-333274, there may be a problem that wiring provided for applying a voltage to the piezoelectric actuator becomes complicated, and that the work for attaching it becomes difficult. In particular, if the variable shape mirror is required to have a small size in the optical system of the optical pickup device or the like, formation of wiring becomes extremely difficult. As a result, there is a problem that the variable shape mirror having the lamination type piezoelectric actuator cannot be used substantially.

### SUMMARY OF THE INVENTION

An object of the present invention is to provide a variable shape mirror having a lamination type piezoelectric actuator capable of generating large power, which can be a small size and is easy to form wiring for applying a voltage to the piezoelectric actuator. Another object of the present invention is to provide a manufacturing method for a variable shape mirror that can easily form a variable shape mirror having a lamination type piezoelectric actuator capable of generating large power.

A variable shape mirror of the present invention includes a support substrate, a mirror substrate that is opposed to the support substrate and has a reflection plane on the surface opposite to the surface facing the support substrate, a fixing member that is disposed on the support substrate and fixes the mirror substrate, and at least one piezoelectric actuator that is disposed on the support substrate so that an area of the mirror substrate enclosed by a portion fixed by the fixing member can be deformed. The piezoelectric actuator is made of layer piezoelectric members and layer electrodes that are laminated alternately, and the layer electrodes are connected alternately to the first common electrodes and second common electrodes that are provided to the side faces of the piezoelectric actuator that are substantially parallel to a lamination direction, so that the layer electrodes have different polarities alternately. When a voltage is applied across the first and the second common electrodes, the variable shape mirror can deform the mirror substrate as well as the reflection plane. The support substrate is provided with at least one conductive bonding portion including two divided areas for bonding to the piezoelectric actuator. The bonding surface of the piezoelectric actuator is provided with a first metal film that is divided into a first area and a second area that are not connected to each other electrically. Each of the side faces of the piezoelectric actuator is provided with a second metal film for connecting the first common electrode with the first area electrically, or for connecting the second common electrode with the second area electrically.

According to this structure, two electrodes, i.e., positive and negative electrodes for applying a voltage to the piezoelectric actuator can be drawn out only on the support substrate. Therefore, when a so-called lamination type piezoelectric actuator is used for deforming the reflection plane of the variable shape mirror, wiring can be simplified without being complicated. For this reason, lead wires are not disposed between the support substrate and the mirror substrate, so that elements of the piezoelectric actuator can be arranged on the support substrate at high density, and that the variable shape mirror can be downsized. In addition, since the wiring is not complicated, a burden of work in the manufacturing process for the variable shape mirror can be reduced.

Further in another aspect of the present invention, as to the variable shape mirror having the structure described above, the first metal film and the second metal film are made of the same material,

According to this structure, since the first metal film formed on the bonding surface of the piezoelectric actuator to be bonded to the support substrate and the second metal film for connecting the first metal film with the common electrode formed on the side face of the piezoelectric actuator are made of the same material, efficiency in forming the first metal film and the second metal film can be improved.

Further in another aspect of the present invention, as to the variable shape mirror having the structure described above, a wiring pattern is formed on the support substrate, and the wiring pattern is drawn out from each of the two divided areas of the bonding portion so as to enable external power supply.

According to this structure, since the wiring pattern for enabling external power supply can be formed simultaneously when the conductive bonding portion is formed on the support substrate, efficiency of the manufacturing process can be improved.

Further in another aspect of the present invention, as to the variable shape mirror having the structure described above, the first metal film works as a bonding film for bonding the piezoelectric actuator and the bonding portion to each other by thermocompression bonding.

According to this structure, since the piezoelectric actuator of the variable shape mirror can be bonded to the support substrate by using the metal film formed on the piezoelectric actuator as a bonding film, the individual members can be bonded not by using adhesive but by using the metal film entirely and integrally as thermocompression bonding when the variable shape mirror is formed

Further in another aspect of the present invention, as to the variable shape mirror having the structure described above, the first metal film is an Au film.

According to this structure, since Au is used for the metal film, high bonding strength can be obtained between the piezoelectric actuator and the support substrate so that the variable shape mirror having high reliability with little probability of breakage in the variable shape mirror can be provided.

A method according to the present invention is a manufacturing method for a variable shape mirror that includes a support substrate, a mirror substrate that is opposed to the support substrate and has a reflection plane on the surface opposite to the surface facing the support substrate, a fixing member that is disposed on the support substrate and fixes the mirror substrate, at least one piezoelectric actuator that is disposed on the support substrate so that an area of the mirror substrate enclosed by a portion fixed by the fixing member can be deformed, the piezoelectric actuator being made of layer piezoelectric members and layer electrodes that are laminated alternately, the layer electrodes being connected alternately to the first common electrodes and second common electrodes that are provided to the side faces of the piezoelectric actuator that are substantially parallel to a lamination direction, so that the layer electrodes have different polarities alternately, the variable shape mirror being capable of deforming the mirror substrate as well as the reflection plane when a voltage is applied across the first and the second common electrodes. The manufacturing method includes a first step for forming at least one conductive bonding portion on the support substrate, the conductive bonding portion being divided into two areas and bonded to the piezoelectric actuator, a second step for disposing a metal film on a bonding surface of the piezoelectric actuator to be bonded to the bonding portion, and on side faces of the piezoelectric actuator so that first and second common electrodes disposed on the side faces are connected electrically to the bonding surface of the piezoelectric actuator and that the first common electrode is not connected electrically to the second common electrode, and a third step for disposing the piezoelectric actuator after the second step on the bonding portion obtained by the first step, and for heating and pressing it to be bonded to the bonding portion.

According to this structure, two electrodes, i.e., positive and negative electrodes for applying a voltage to the piezoelectric actuator can be drawn out only on the support substrate. Further, lead wires are unnecessary for wiring, so a burden of work in manufacturing the variable shape mirror having a lamination type piezoelectric actuator can be reduced. In addition, since lead wires are unnecessary for wiring, elements can be arranged on the support substrate at high density so that the optical pickup device can be downsized.

Further in another aspect of the present invention, as to the manufacturing method for a variable shape mirror having the structure described above, the first step includes forming a wiring pattern that is drawn out from each area of the bonding portion when the bonding portion is formed, so as to enable external power supply.

According to this structure, since the wiring pattern for enabling external power supply can be formed simultaneously when the conductive bonding portion is formed on the support substrate, efficiency of the manufacturing process can be improved

### BRIEF DESCRIPTION OF THE DRAWINGS

Fig. 1 is a diagram showing a structure of a variable shape mirror according to an embodiment of the present invention, which is a general perspective view showing a state before a mirror substrate of the variable shape mirror is bonded.
Fig. 2 is a plan view showing a structure of a support substrate that is provided to the variable shape mirror of the present embodiment
Fig. 3 is a general cross sectional view of the variable shape mirror shown in Fig. 1 in the assembled state, cut along the line A-A in Fig. 1.
Fig. 4 is a general cross section showing a structure of the piezoelectric actuator of the present embodiment.
Fig. 5 is a diagram showing the variable shape mirror of Fig. 3 in the state where the piezoelectric actuator is expanded

### DETAILED DESCRIPTION OF THE PREFERRED EMBODIMENTS

Hereinafter, an embodiment of the present invention will be described with reference to the attached drawings. Note that the embodiment described here is merely an example, and that the present invention is not limited to this embodiment. In addition, sizes and thicknesses and the like of individual elements in the drawings are shown for a purpose of easy understanding and do not always match the real structure.

### (Structure of variable shape mirror)

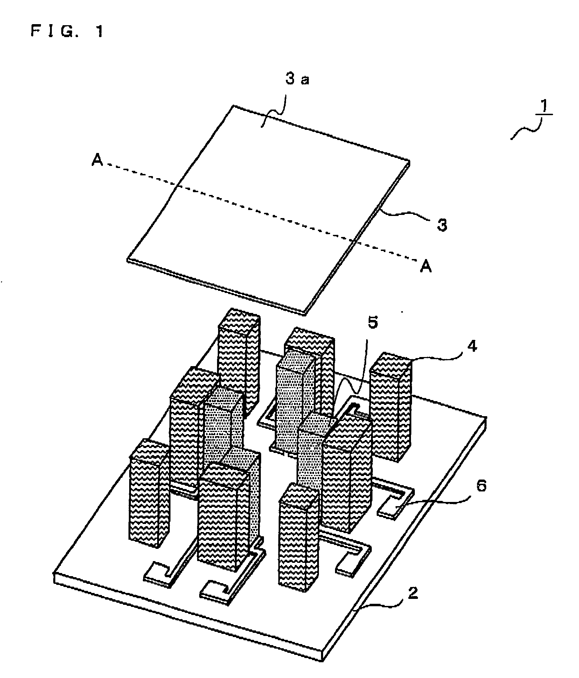

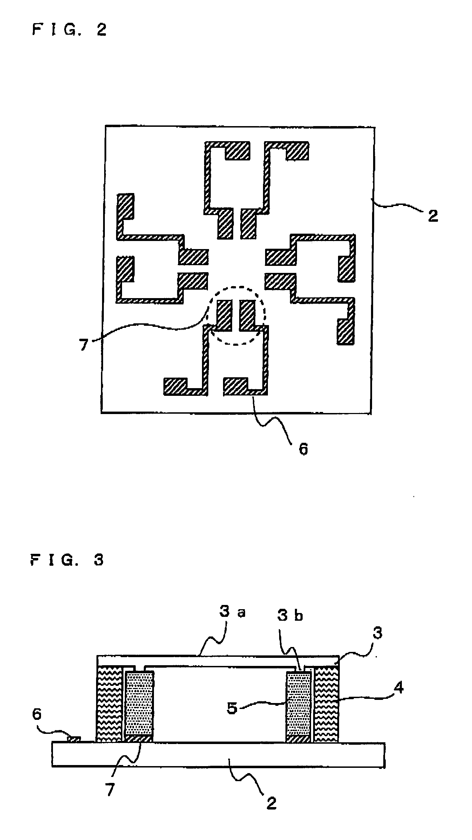

Fig. 1 is a diagram showing an embodiment of a variable shape mirror of the present invention and is a general perspective view showing a state before a mirror substrate of the variable shape mirror is bonded. Fig. 2 is a plan view showing a structure of a support substrate that is provided to the variable shape mirror of the present embodiment. Fig. 3 is a general cross sectional view of the variable shape mirror with the bonded mirror substrate shown in Fig. 1, cut along the line A-A in Fig. 1. With reference to Figs. 1 to 3 mainly, a structure of the variable shape mirror of the present embodiment will be described.

Numeral 1 denotes the variable shape mirror that is capable of deforming its reflection plane so that optical distortion of an incident light beam can be corrected. This variable shape mirror 1 includes a support substrate 2, a mirror substrate 3 that is opposed to the support substrate 2, fixing members 4 that are disposed on the support substrate 2 and fix the mirror substrate 3, and piezoelectric actuators 5 that are disposed on the support substrate 2 and press the mirror substrate 3 by their expansion and contraction so that a reflection plane 3a can be deformed. Hereinafter, the individual portions will be described in detail.

The support substrate 2 plays a role of supporting the fixing members 4 and the piezoelectric actuators 5, The support substrate 2 is made up of an insulating member and is formed with glass or ceramics or the like, for example. On the support substrate 2, there are provided wiring patterns 6 made of a conductive member and bonding portions 7 for bonding the piezoelectric actuators 5 as shown in Fig. 2. In the present embodiment, the wiring pattern 6 and the bonding portion 7 are made of silicon (Si).

The bonding portion 7 includes two divided areas, which are not connected electrically to each other. The reason why the bonding portion 7 is divided into two areas will be described later. In addition, the wiring pattern 6 is drawn out from each of the divided areas of the bonding portion 7. This wiring pattern 6 enables external power supply to the piezoelectric actuator 5.

Although silicon is selected for a conductive member to form the wiring pattern 6 and the bonding portion 7 in the present embodiment, it is sufficient if the wiring pattern 6 and the bonding portion 7 are formed of a conductive member. It is possible to adopt another structure in which a metal pattern is formed on an insulating support substrate 2.

The mirror substrate 3 is disposed in substantially parallel with the support substrate 2 and is opposed to the same, and the reflection plane 3 a is formed on the surface that is opposite to the surface facing the support substrate 2. Since this mirror substrate 3 has a structure of being deformed by expansion and contraction of the piezoelectric actuator 5 so that the reflection plane 3a is also deformed, it is required to be formed having a small thickness. In addition, in order to avoid a breakage of the mirror substrate 3 when it is deformed by the expansion and contraction of the piezoelectric actuator 5 it is required to be made of a material having stiffness. Considering this point, the mirror substrate 3 is made up of a silicon (Si) substrate having a thickness of approximately 100 µm in the present embodiment.

Although the mirror substrate 3 is made of silicon in the present embodiment, the present invention is not limited to this structure. It may be made of other material as long as it can be thinner and has stiffness. In addition, the thickness of the silicon substrate 3 can be changed in accordance with its purpose without limited to the thickness of the present embodiment.

The reflection plane 3a of the mirror substrate 3 is obtained by forming an aluminum (Al) layer on the mirror substrate 3. The Al layer is formed by a vapor deposition method or a sputtering method or the like. Note that the reflection plane 3a can be made not only of aluminum but also of other material as long as it can realize a desired reflection coefficient for reflection light of a light beam entering the reflection plane 3a of the variable shape mirror 1. For example, gold (Au) or silver (Ag) or the like can be used as various modifications. In addition, although the entire of the upper surface of the mirror substrate 3 is made the reflection plane 3a in the present embodiment, the present invention is not limited to this structure. It is possible to adopt another structure in which an area of the reflection plane 3a is determined in accordance with an incident diameter of the incident light beam, so that a reflection layer is formed only in the area.

In addition, the surface of the mirror substrate 3 that faces the support substrate 2 is provided with protruding portions 3b that contact with the piezoelectric actuators 5 as shown in Fig. 3. They are provided for a purpose of transferring efficiently the force that is applied to the mirror substrate 3 by expansion and contraction of the piezoelectric actuator 5. The protruding portions 3b are formed by an etching process, for example. Although the protruding portions 3b are formed in the present embodiment, it is of course possible to adopt another structure in which the protruding portion 3b is not provided.

The fixing member 4 is disposed on the support substrate 2 and plays a role of fixing the mirror substrate 3. In the present embodiment, the fixing member 4 supports the mirror substrate 3 at eight points including its four corners and middle portions of four sides on the outer rim of the rectangular mirror substrate 3 (positions sandwiched by two of the four fixing members 4 disposed at corners). Note that the arrangement of the fixing members 4 is not limited to the structure of the present embodiment, but various modifications are possible as long as the outer rim of the minor substrate 3 can be fixed securely by the structure.

This fixing member 4 is made of glass or ceramics or the like, for example.
Bonding of the fixing member 4 to the support substrate 2, and bonding of the fixing member 4 to the mirror substrate 3 are both performed by a method of disposing an Au layer to be a bonding layer between them and applying a pressure to them under a condition of high temperature in a range of 400 to 550 degrees centigrade, for example. Note that the bonding layer is not limited to the Au layer but can be other metal layer, e.g., an Au-Sn alloy or the like. In addition, it is possible to use adhesive for bonding them.

The piezoelectric actuator 5 is expanded or contracted when a voltage is applied, so that the mirror substrate 3 as well as the reflection plane 3a can be deformed. The piezoelectric actuators 5 are disposed on the support substrate 2 and inside the fixing members 4 for fixing the mirror substrate 3 that are disposed at the outer rim side of the mirror substrate 3.

Four of the piezoelectric actuators 5 are disposed on the support substrate 2 in the cross direction, so that two of the piezoelectric actuators facing each other are arranged symmetrically with respect to the axis passing through the center of the reflection plane 3a and is perpendicular to the reflection plane 3a. This arrangement of the piezoelectric actuators 5 is adopted for a purpose of deforming the reflection plane 3a easily with good valance without increasing the number of the piezoelectric actuators 5 excessively. However, the arrangement and the number of the piezoelectric actuators 5 are not limited to this structure but can be modified variously so that the reflection plane 3a of the mirror substrate 3 can be deformed in accordance with the purpose thereof.

In addition, the piezoelectric actuators 5 is not bonded to the mirror substrate 3 and are disposed so as to contact with the protruding portions 3b formed on the mirror substrate 3 in the present embodiment. The reason why the piezoelectric actuator 5 is not bonded to the mirror substrate 3 is to reduce distortion as much as possible, which may occur in the reflection plane 3a of the mirror substrate 3 if the piezoelectric actuator 5 is bonded to the mirror substrate 3.

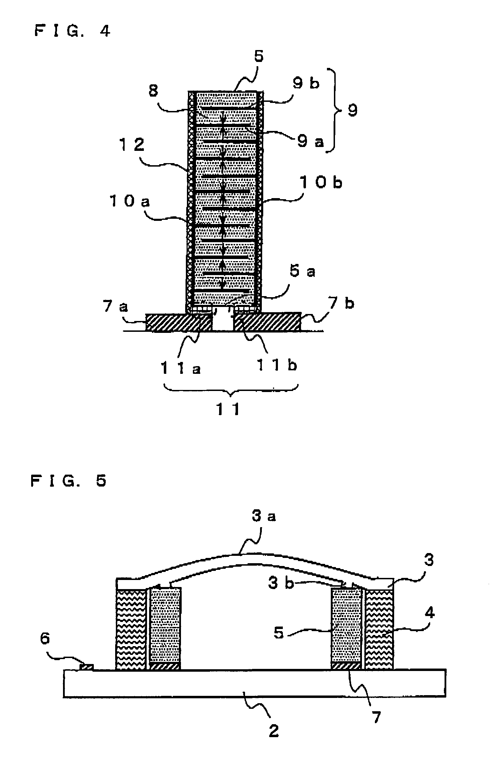

This piezoelectric actuator 5 is a so-called lamination type piezoelectric actuator. Fig. 4 is a general cross sectional view showing a structure of the piezoelectric actuator 5 of the present embodiment Note that Fig. 4 also shows the bonding portion 7 (two areas 7a and 7b constituting the bonding portion 7) to which the piezoelectric actuator 5 is bonded.

As shown in Fig. 4, the piezoelectric actuator 5 has a structure in which layer piezoelectric members 8 and layer inner electrodes 9 are laminated alternately. The inner electrodes 9 includes two types, i.e., inner electrodes 9a and inner electrodes 9b, which are connected to a first common electrode 10a and a second common electrode 10b, respectively, which are provided to two opposed side faces of the piezoelectric actuator 5, respectively. Therefore, the inner electrodes 9 of the piezoelectric actuator 5 have different polarities (positive and negative polarities) alternately.

In addition, the piezoelectric members 8 sandwiched between the inner electrodes 9a and 9b are treated with a polarization process so that polarization appears in the direction shown in Fig. 4 by arrows. Note that the polarization process means to apply high dc electric field while heating so that electric dipoles inside the piezoelectric member 8 are directed uniformly in a constant direction and piezoelectric activity is given.

As shown in Fig. 4, the piezoelectric members 8 of the piezoelectric actuator 5 are arranged to have different polarization directions alternately. According to this structure, when a voltage is applied to the inner electrodes 9 that become the positive electrode and the negative electrode alternately (a voltage is applied to the first common electrode 10a and the second common electrode 10b so that one of the electrodes becomes the positive electrode and the other becomes the negative electrode), all the piezoelectric members 8 will be either expanded or contracted. Therefore, according to this structure, a large displacement can be obtained (a large force can be generated) by a low driving power as known.

Furthermore, among the piezoelectric members 8 of the piezoelectric actuator 5, the upper end and the lower end piezoelectric members 8 are not treated with the polarization process in the present embodiment. This is because that the upper end and the lower end of the piezoelectric actuator 5 contact with conductive members. Concerning this point, it is important that the piezoelectric member 8 of the lower end in particular is not treated with the polarization process in the present embodiment. The reason will be described later.

Although a type of the material of the piezoelectric member 8 is not limited as long as it is piezoelectric ceramics such as barium titanate (BaTiO₃) or lead titanate zirconate (Pb(ZrₓTi₁₋ₓO₃), the present embodiment uses the lead titanate zirconate that has good piezoelectric characteristics.

As to the lamination type piezoelectric actuator 5 having the structure described above, it is necessary to draw out lead wires from the first common electrode 10a and the second common electrode 10b that are formed on the side faces thereof. The variable shape mirror 1 of the present invention is devised so that circuit elements including the fixing members 4 and the piezoelectric actuators 5 can be arranged on the support substrate 2 at high density, and further that wiring work does not become a large burden when the variable shape mirror 1 is manufactured.

A bonding surface 5a of the piezoelectric actuator 5 with the support substrate 2 is provided with a first metal film 11. The first metal film 11 is divided into a first area 11 a and a second area 11b at the middle portion of the bonding surface 5a in the present embodiment as shown in Fig. 4. Note that the first area 11a and the second area 11 b are not connected to each other electrically. The first area 11 a is connected electrically to the first common electrode 10a via a second metal film 12, and the second area 11 b is connected electrically to the second common electrode 10b via the second metal film 12.

As described above, the piezoelectric actuator 5 is disposed on the bonding portion 7 that is provided to the support substrate 2, so that the first area 11a and the second area 11b of the first metal film 11 contact different areas, i.e., two areas 7a and 7b of the bonding portion 7, respectively. Therefore, the first common electrode 10a is connected to the area 7a of the bonding portion 7 made of a conductive member via the first metal film 11 and the second metal film 12. In addition, the second common electrode 10b is connected to the area 7b of the bonding portion 7 made of a conductive member via the first metal film 11 and the second metal film 12. Note that the two areas 7a and 7b of the bonding portion 7 are not connected to each other electrically as described above, so the first common electrode 10a and the second common electrode 10b do not make a short circuit.

As described above, the variable shape mirror 1 of the present embodiment can draw out both the positive electrode and the negative electrode for applying a voltage to the piezoelectric actuator 5 with the bonding portion 7 that is provided to the support substrate 2. Further, the wiring pattern 6 is drawn out from each of the areas 7a and 7b of the bonding portion 7, which enables external power supply. Therefore, it is not necessary to connecting lead wires to the piezoelectric actuator 5 by soldering or wire bonding as the conventional structure. Therefore, wiring structure does not become complicated, and a burden of manufacturing work for the variable shape mirror 1 can be reduced. Furthermore, since a space occupied by the wiring can be eliminated, the fixing members 4 and the piezoelectric actuator 5 can be arranged on the support substrate 2 at high density, so that the variable shape mirror 1 can be downsized.

Although drawing out the wiring from the bonding portion 7 is realized by forming the wiring pattern 6 on the surface of the support substrate 2 facing the mirror substrate 3 in the present embodiment, it is possible to adopt another structure in which a through hole is provided to the bonding portion 7, and wiring is formed in this portion. However, the structure, which has the wiring pattern formed on the same surface of the support substrate 2 on which the bonding portion 7, is more preferable because the bonding portion 7 and the wiring pattern 6 can be formed efficiently.

In addition, the present embodiment uses a gold (Au) film as the metal film for the first metal film 11, which enables the piezoelectric actuator 5 and the bonding portion 7 can be bonded to each other by thermocompression bonding that will be described later. Therefore, there is also an advantage that drawing out of the electrode of the piezoelectric actuator 5 can be performed simultaneously with bonding of the piezoelectric actuator 5.

Although the Au film is used for the first metal film 11 in the present embodiment, the present invention is not limited to this structure. It is possible to use other metal film as long as the metal can bond the piezoelectric actuator 5 with the bonding portion 7 by thermocompression bonding. For example, an alloy of gold and tin (Au-Sn alloy) can be used.

In addition, it is possible to adopt a structure in which conductive adhesive is used between the piezoelectric actuator 5 and the bonding portion 7 so that the piezoelectric actuator 5 and the bonding portion 7 can be bonded to each other not by the thermocompression bonding method. In this case too, there is an advantage that the drawing out of the electrode of the piezoelectric actuator 5 can be realized simultaneously with bonding of the piezoelectric actuator 5. Further in this case, the first metal film 11 is not required to be a metal film that is capable of thermocompression bonding.

In addition, the second metal film 12 is also the Au film in the present embodiment. This is because the manufacturing process becomes simpler if the first metal film 11 and the second metal film 12 are made of the same material. Note that it is of course possible to use different types of metal films for the first metal film 11 and the second metal film 12, though work efficiency may be deteriorated.

Furthermore, as described above, among the piezoelectric members 8 of the piezoelectric actuator 5, the piezoelectric member 8 that is disposed at the position to be bonded to the bonding portion 7 (the lower end piezoelectric member 8) is not treated with the polarization process. This is because of the following reason. In the structure of the present embodiment, the lower end piezoelectric member 8 is sandwiched between the inner electrode 9a and two areas 7a and 7b of the bonding portion 7 that are connected to different electrodes, i.e., the first common electrode 10a and the second common electrode 10b. Therefore, if the piezoelectric member 8 of this portion is treated with the polarization process, the lower end piezoelectric member 8 will generate a portion that is not expanded or contracted and a portion that is expanded or contracted when a voltage is applied to the lamination type piezoelectric actuator 5. As a result, there will be a bad effect such as a gradient of expansion and contraction direction that may be generated in the piezoelectric actuator 5.

### (Operation of variable shape mirror)

An operation of the variable shape mirror 1 having the structure described above will be described. Fig. 5 is a diagram showing the state where the piezoelectric actuator 5 is expanded in the variable shape mirror 1 shown in Fig. 3. As shown in Fig. 5, if the piezoelectric actuator 5 is expanded, the mirror substrate 3 is pressed upward so that the reflection plane 3a is deformed. On the other hand, since the piezoelectric actuator 5 and the mirror substrate 3 are not bonded to each other, the mirror substrate 3 is not deformed. Fig. 5 shows the state where the same voltage is applied to the left and the right piezoelectric actuators 5 so that they are extended in the same manner. However, it is possible to control the voltages to be applied to the piezoelectric actuators 5 and to apply different voltages to them so that a desired deformation of the reflection plane 3a can be obtained.

In addition, although the reflection plane 3a is not deformed when the piezoelectric actuator 5 is contracted in the present embodiment, it is of course possible to adopt another structure in which the piezoelectric actuator 5 and the mirror substrate 3 are bonded so that the reflection plane 3a of the mirror substrate 3 can be deformed in both cases where the piezoelectric actuator 5 is expanded and where it is contracted.

### (Manufacturing method for variable shape mirror)

Next, a manufacturing method for the variable shape mirror according to the present embodiment will be described. First, the support substrate 2 is formed by bonding a silicon layer to glass. The silicon layer of the support substrate 2 is treated with etching or sandblasting process so that it is removed except for a portion to be the bonding portion 7 and the wiring pattern 6 that is drawn out from the bonding portion 7.

The first metal film 11 (the Au film) is formed on the bonding surface 5a of the piezoelectric actuator 5 that is manufactured by a known method, by a vapor deposition method or a sputtering method, for example. In this case, a gap is formed between the first area 11a and the second area 11b of the first metal film 11 to prevent a short circuit between the first area 11a and the second area 11b. The gap is formed, for example, by the method in which a portion to be the gap is masked, and vapor deposition or the like is performed.

Next, the first common electrode 10a and the second common electrode 10b that are formed on the side faces of the piezoelectric actuator 5 are covered with the second metal film 12 (Au film) by the vapor deposition method or the sputtering method, for example, so that the first common electrode 10a and the second common electrode 10b on the side faces of the piezoelectric actuator 5 are connected electrically to the first metal film 11.

Although the first common electrode 10a and the second common electrode 10b are covered entirely with the second metal film 12 in the present embodiment as shown in Fig. 4, the present invention is not limited to this structure. It is sufficient that the second metal film 12 is provided on the side faces of the piezoelectric actuator 5 to the extent that the first common electrode 10a can be connected to the first area 11 a electrically, or the second common electrode 10b can be connected to the second area 11b electrically

Next, the fixing members 4 and the piezoelectric actuator 5 having adjusted heights are bonded to the support substrate 2 by the thermocompression bonding method. The bonding by the thermocompression bonding method is performed as follows. An Au film is formed on the portion to be bonded of each member by the vapor deposition method or the sputtering method, for example (the metal film is already formed on the piezoelectric actuator 5 in the step described above). After that, a predetermined pressure (e.g., 0.2 MPa) is applied to the fixing member 4 and the piezoelectric actuator 5 while they are heated (e.g., at 400 to 550 degrees centigrade).

Although the Au film is formed for the thermocompression bonding process in the present embodiment, the present invention is not limited to this structure. For example, it is possible to use an alloy of gold and tin (Au-Sn alloy). However, it is preferable to use the Au film because bonding strength is enhanced if the Au film is used for the thermocompression bonding process.

Next, after the Au film is formed on the surface of the mirror substrate 3 opposite to the surface on which the reflection plane 3 a is formed, by the vapor deposition method or the sputtering method, the mirror substrate 3 and the fixing member 4 are bonded to each other by applying a predetermined pressure (e.g., 0.2 MPa) to the fixing member 4 while under a heated condition (e.g., at 400 to 550 degrees centigrade). In this case too, it is possible to use a film of an Au-Sn alloy, for example, instead of the Au film for the thermocompression bonding process.

Thus, manufacturing of the variable shape mirror of the present embodiment is completed. The manufacturing method for the variable shape mirror 1 is not limited to the steps described above but can be modified variously. For example, although bonding between the fixing member 4 and the support substrate 2, bonding between the fixing member 4 and the mirror substrate 3, and bonding between the piezoelectric actuator 5 and the support substrate 2 (the bonding portion 7 of the support substrate 2) are performed by the thermocompression bonding method in the present embodiment, it is possible to use adhesive for bonding them. However, it is preferable to bond the mirror substrate 3 to the fixing member 4 by the thermocompression bonding method for the reason that a thin bonding film can be formed so that the mirror substrate 3 can be deformed efficiently. Therefore, it is preferable to use the thermocompression bonding method for bonding all of the members.

### (Others)

Although a general shape of the variable shape mirror 1 in the embodiment described above is a rectangular shape as shown in Fig. 1, it is not limited to this shape in particular but can be modified within the scope of the present invention without deviating from the object thereof. For example, the support substrate 2 and the mirror substrate 3 and the like may have a circular shape. In addition, shapes of the fixing member 4 and the piezoelectric actuator 5 are also not limited to the shapes of the present embodiment but can be a cylindrical shape, for example.

The variable shape mirror of the present invention can reduce its size while the variable shape mirror has a lamination type piezoelectric actuator that is capable of generating large force. Further, it can reduce a burden of work in the manufacturing process according to its structure. Therefore, it is useful in particular for an optical device that needs a compact variable shape mirror having a large deformation of the reflection plane. For example, it is useful in particular for an optical pickup device, a video projector, a digital camera or the like.

In addition, according to the manufacturing method for the variable shape mirror of the present invention, it is able to reduce a burden of work in the manufacturing process for the variable shape mirror having a lamination type piezoelectric actuator. Therefore, it is useful as a manufacturing method for a variable shape mirror having a lamination type piezoelectric actuator.

## Claims

1. A variable shape mirror comprising:
a support substrate;
a mirror substrate that is opposed to the support substrate and has a reflection plane on the surface opposite to the surface facing the support substrate;
a fixing member that is disposed on the support substrate and fixes the mirror substrate; and
at least one piezoelectric actuator that is disposed on the support substrate so that an area of the mirror substrate enclosed by a portion fixed by the fixing member can be deformed, **characterized in that**
the piezoelectric actuator is made of layer piezoelectric members and layer electrodes that are laminated alternately, and the layer electrodes are connected alternately to the first common electrodes and second common electrodes that are provided to the side faces of the piezoelectric actuator that are substantially parallel to a lamination direction, so that the layer electrodes have different polarities alternately,
the support substrate is provided with at least one conductive bonding portion including two divided areas for bonding to the piezoelectric actuator,
the bonding surface of the piezoelectric actuator is provided with a first metal film that is divided into a first area and a second area that are not connected to each other electrically, and
each of the side faces of the piezoelectric actuator is provided with a second metal film for connecting the first common electrode with the first area electrically, or for connecting the second common electrode with the second area electrically.

2. The variable shape mirror according to claim 1, **characterized in that**
the first metal film and the second metal film are made of the same material.

3. The variable shape mirror according to claim 1 or 2, **characterized in that**
a wiring pattern is formed on the support substrate, and the wiring pattern is drawn out from each of the two divided areas of the bonding portion so as to enable external power supply.

4. The variable shape mirror according to any one of claims 1 to 3, **characterized in that**
the first metal film works as a bonding film for bonding the piezoelectric actuator and the bonding portion to each other by thermocompression bonding.

5. The variable shape mirror according to claim 4, **characterized in that**
the first metal film is an Au film.

6. A manufacturing method for a variable shape mirror that includes a support substrate, a mirror substrate that is opposed to the support substrate and has a reflection plane on the surface opposite to the surface facing the support substrate, a fixing member that is disposed on the support substrate and fixes the mirror substrate, at least one piezoelectric actuator that is disposed on the support substrate so that an area of the mirror substrate enclosed by a portion fixed by the fixing member can be deformed, the piezoelectric actuator being made of layer piezoelectric members and layer electrodes that are laminated alternately, the layer electrodes being connected alternately to the first common electrodes and second common electrodes that are provided to the side faces of the piezoelectric actuator that are substantially parallel to a lamination direction, so that the layer electrodes have different polarities alternately, the variable shape mirror being capable of deforming the mirror substrate as well as the reflection plane when a voltage is applied across the first and the second common electrodes, the manufacturing method comprising:
a first step for forming at least one conductive bonding portion on the support substrate, the conductive bonding portion being divided into two areas and bonded to the piezoelectric actuator,
a second step for disposing a metal film on a bonding surface of the piezoelectric actuator to be bonded to the bonding portion, and on side faces of the piezoelectric actuator so that first and second common electrodes disposed on the side faces are connected electrically to the bonding surface of the piezoelectric actuator and that the first common electrode is not connected electrically to the second common electrode; and
a third step for disposing the piezoelectric actuator after the second step on the bonding portion obtained by the first step, and for heating and pressing it to be bonded to the bonding portion.

7. The manufacturing method for a variable shape mirror according to claim 6, **characterized in that**
the first step includes forming a wiring pattern that is drawn out from each area of the bonding portion when the bonding portion is formed, so as to enable external power supply.
